# EUROPEAN PATENT APPLICATION

(11) **EP 4 640 527 A1**
(43) Date of publication of application: **29.10.2025**
(21) Application number: 23907620.1
(22) Date of filing: 15.12.2023
(51) Int. Cl.: B62D 21/15, B60K 1/04, B60L 50/60, B60L 50/64

(54) **BATTERY FRAME AND ELECTRIC CAR FRAME COMPRISING SAME**

(30) Priority: 21.12.2022 KR 20220181118
(71) Applicant: POSCO Co., Ltd, Pohang-si, Gyeongsangbuk-do 37859 (KR)
(72) Inventor: LEE, Hong-Woo, Incheon 21985 (KR); LEE, Gyu-Min, Incheon 21985 (KR); KIM, Jaehyun, Incheon 21985 (KR); KIM, Hwi-Geon, Incheon 21985 (KR)
(74) Representative: Meissner Bolte Partnerschaft mbB
(86) International application number: PCT/KR2023/020747
(87) International publication number: WO 2024/136334

(57) **Abstract**

The present invention relates to a battery frame comprising reinforcement members on the front and rear sides of the battery frame, thereby reinforcing the battery frame, and an electric car frame comprising same. According to an embodiment of the present invention, the battery frame has a battery area defined such that a battery is positioned therein, and comprises: a first subframe formed so as to surround at least a part of the battery area, and disposed in parallel to a first direction which corresponds to the longitudinal direction of the vehicle; a second subframe positioned at an interval from the first subframe, which is equal to or larger than the battery area, in a second direction corresponding to the transverse direction of the vehicle; a third subframe connected to one end of the first and second subframes and disposed in the second direction; and a fourth subframe connected to the other end of the first and second subframes. A hollow portion is formed inside the third or fourth subframe, and the battery frame further comprises a reinforcement member disposed in the hollow portion so as to abut the third or fourth subframe. When seen in a third direction which corresponds to the height direction of the vehicle, the first to fourth subframes are connected as one frame so as to surround the battery area.

## Description

### Technical Field

The present disclosure relates to a battery frame including a reinforcing member on front and rear sides of the battery frame, thereby reinforcing the reinforcing member, and an electric vehicle frame including the same.

### Background Art

In general, a vehicle having a body-on-frame structure has a vehicle body structure formed by assembling a frame, forming a lower portion thereof, and a vehicle body including a passenger compartment.

In the case of an electric vehicle, unlike a conventional vehicle body structure, it is common that a battery is disposed in an internal space of the frame. When provided with a battery, a typical body-on-frame vehicle body structure would have difficulty in protecting the battery in the event of a collision without additional reinforcement.

In addition, a frame path is configured by spreading the frame as much as possible in a width direction of the vehicle to secure a battery space, which makes it more difficult to prevent frame deformation due to external collisions. Therefore, structural supplementation is required to protect the battery.

(Patent Document 0001) Korean Publication No. 10-2022-0093234 (Published on July 5, 2022)

### Summary of Invention

### Technical Problem

The present disclosure is intended to solve the above-described problems, and an aspect of the present disclosure is to provide an electric vehicle battery frame structure that can supplement impacts to the front and rear sides thereof.

### Solution to Problem

In order to achieve the above-described purpose, in the present disclosure, provided is a battery frame formed as follows.

According to an embodiment of the present disclosure, provided is a battery frame having a battery region in which a battery is located defined therein, the battery frame including: a first subframe formed to surround at least a portion of the battery region, and disposed parallel to a first direction, a longitudinal direction of a vehicle; a second subframe located at an interval, equal to or greater than the battery region, in a second direction, a width direction of the vehicle, from the first subframe; a third subframe connected to one end of the first subframe and the second subframe, and disposed in the second direction; and a fourth subframe connected to the other end of the first subframe and the second subframe, wherein a hollow portion is formed inside the third subframe or the fourth subframe, and the battery frame further includes a reinforcing member disposed in the hollow portion to abut the third subframe or the fourth subframe, wherein, when viewed from a third direction, a height direction of the vehicle, the first subframe to the fourth subframe are connected as a single frame to surround the battery region.

The third subframe or the fourth subframe includes an inner member forming an inner surface abutting the battery region, and an outer member coupled to the inner member at both ends in the third direction, and having a cross-section parallel to the first direction forming the hollow portion while being coupled to the inner member, wherein the reinforcing member may be in contact with the outer member.

The reinforcing member may be a hollow pipe.

A bracket for fixing the reinforcing member may be further included, wherein the bracket may include a receiving groove for receiving the reinforcing member and a flat portion coupled to the outer member.

The bracket may have a plurality of the receiving grooves, the bracket may extend in the third direction and may be provided in plural in the second direction, and the reinforcing member may be provided in plural in the third direction.

At least a portion of the reinforcing member may be in contact with the first subframe or the second subframe, and an end of the reinforcing member and the first subframe or the second subframe, which are in contact, may be coupled by the bracket.

The reinforcing member may be provided in plural in the third direction, and include a first reinforcing member having both ends curved to be in contact with the first subframe and the second subframe, and
a second reinforcing member having a length shorter than the first reinforcing member, having one end in contact with the first subframe or the second subframe, and the other end coupled to the third subframe or the fourth subframe.

The inner member and the outer member may be in surface contact at one end, and may be in line contact at the other end, wherein the inner member and the bracket may be spaced apart from each other.

According to an embodiment of the present disclosure, provided is an electric vehicle frame, the electric vehicle frame including: a battery frame of claims 1 to 6, having a battery region in which a battery is located defined therein, and formed to surround the battery region, a front frame and a rear frame coupled to the battery frame in a first direction, a longitudinal direction of a vehicle; a floor covering at least one surface of the battery region, and coupled to the battery frame; and a cross member coupled to the floor and located outside of the battery region.

### Advantageous Effects of Invention

As set forth above, according to the present disclosure, through the structure described above, an effect of minimizing deformation due to an external load since resistance to initial deformation is high may be provided.

An effect that can minimize a battery region may be provided without requiring additional space for reinforcement.

### Brief description of drawings

FIG. 1 is a perspective view of a conventional body-on-frame vehicle body structure.
FIG. 2 is a perspective view of a battery frame according to an embodiment of the present disclosure.
FIG. 3 is an exploded view of a third subframe and a fourth subframe according to an embodiment of the present disclosure.
FIG. 4 is a cross-sectional view of a third subframe according to an embodiment of the present disclosure.
FIG. 5 is a perspective view of a bracket according to an embodiment of the present disclosure.

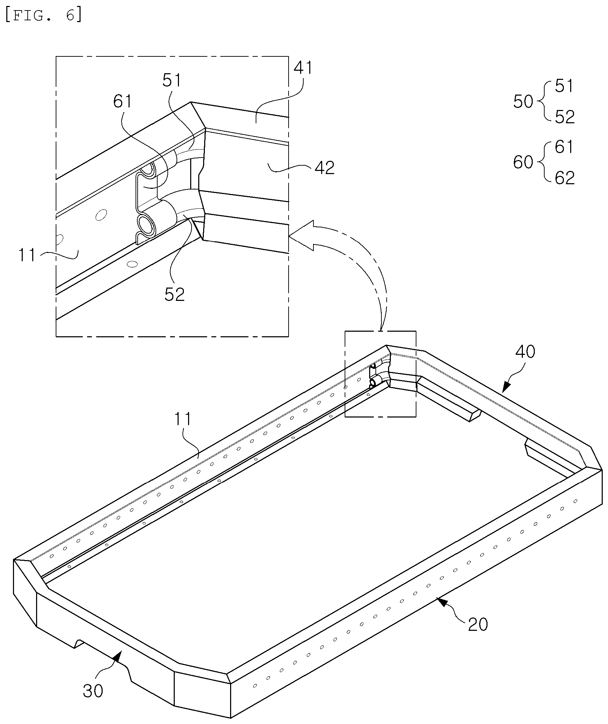

FIG. 6 is a drawing illustrating that a reinforcing member is connected to the inside of a first subframe according to an embodiment of the present disclosure.
FIG. 7 is a drawing illustrating a frame for an electric vehicle according to an embodiment of the present disclosure.

### Mode for Invention

Hereinafter, specific embodiments of the present disclosure will be described with reference to the attached drawings. However, the spirit of the present disclosure is not limited to the presented embodiments, and other regressive inventions or other embodiments included in the spirit of the present disclosure may be easily suggested by a person skilled in the art who understands the spirit of the present disclosure by adding, changing, or deleting other components within the scope of the same spirit, but it will also be said to be included within the scope of the present disclosure.

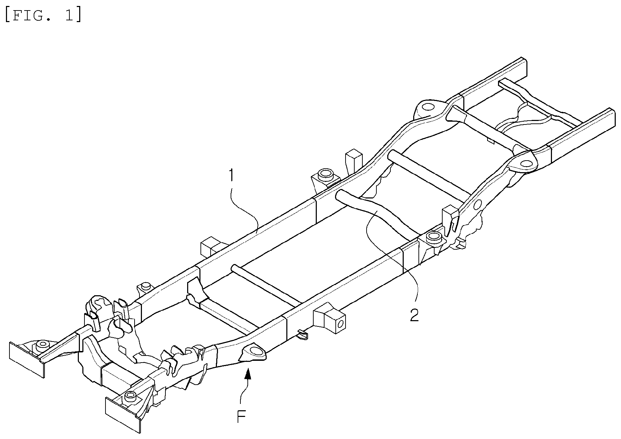

FIG. 1 illustrates a perspective view of a conventional body-on-frame vehicle body structure.

In a vehicle with a conventional body-on-frame structure, a frame F is formed by coupling a longitudinal member 1 formed in a longitudinal direction of a vehicle and a transverse member 2 formed in a width direction of the vehicle, and a body including a passenger riding space is coupled to an upper portion of the frame F.

However, since electric vehicles should be provided with a battery pack, there should be a battery region in which the battery pack is installed, and to maximize the battery region, a reinforcing structure having a region as wide as possible in the width direction of the vehicle, but for preventing structural rigidity from being weaker as compared to the conventional structure, is needed.

The present disclosure is intended to solve the problems described above, and an object of the present disclosure is to maximize a battery region and to prevent deformation by transmitting impacts to a battery located in the battery region due to impacts at the front and rear sides thereof in longitudinal direction.

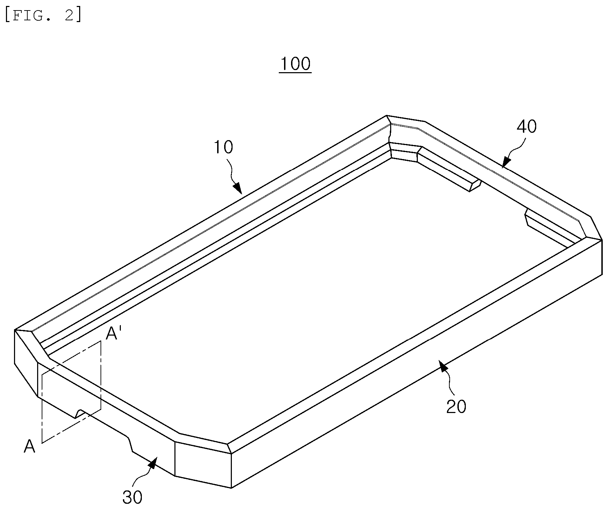

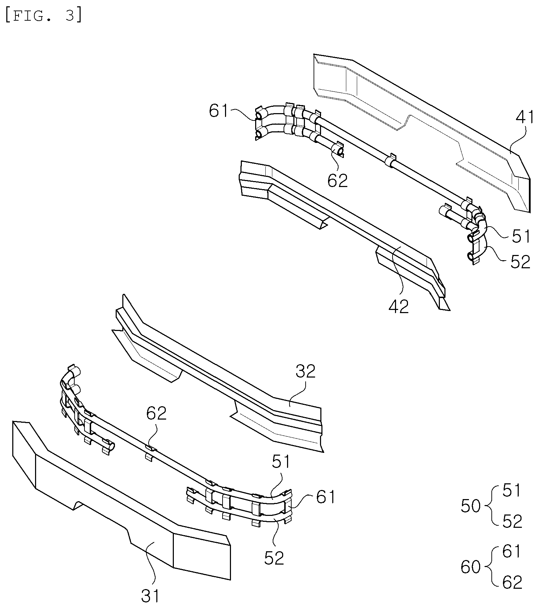

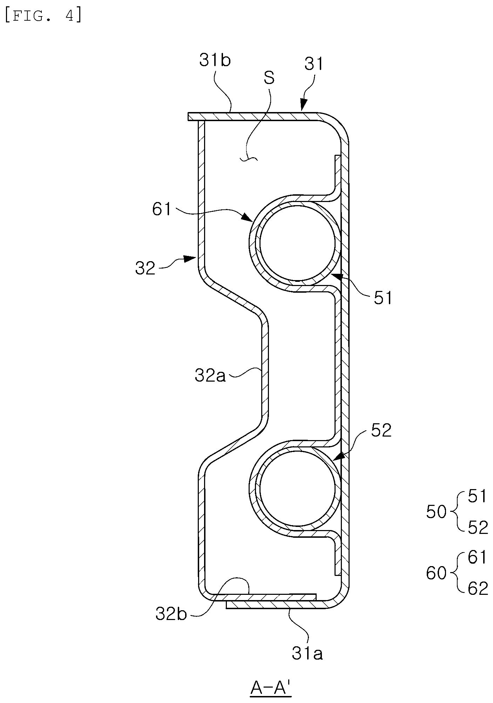

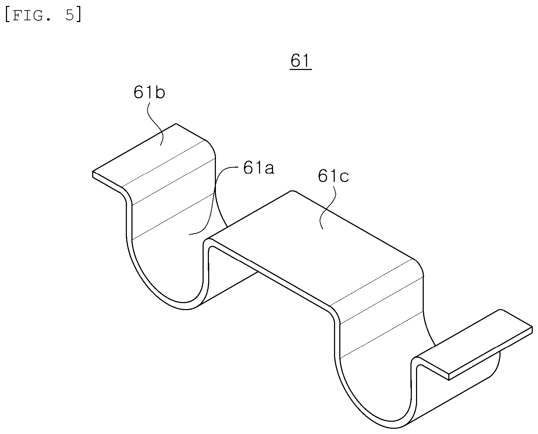

FIG. 2 is a perspective view of a battery frame according to an embodiment of the present disclosure. FIG. 3 is an exploded view of a third subframe and a fourth subframe, and FIG. 4 illustrates a cross-sectional view of a third subframe. FIG. 5 is a perspective view of a bracket according to an embodiment of the present disclosure, and FIG. 5 is a drawing illustrating a reinforcing member connected to the inside of a first subframe. FIG. 4 illustrates a cross-sectional view of a third subframe, but in FIG. 4, a fourth subframe may also have a similar cross-section thereof formed.

A battery frame 100 according to an embodiment of the present disclosure includes a first subframe 10, a second subframe 20, a third subframe 30, a fourth subframe 40, and a reinforcing member 50.

The battery frame 100 may have a battery region in which a battery is located defined, and a first subframe 10 to a fourth subframe 40 may be disposed at the periphery of the battery region. When viewed from a third direction, a height direction of the vehicle, the first subframe 10 to the fourth subframe 40 may be connected as a single frame and formed to surround the battery region. That is, the battery frame 100 including the first subframe 10 to the fourth subframe 40 may have a loop shape in appearance.

The first subframe 10 may be formed to surround at least a portion of the battery region, and may be disposed parallel to a first direction, a longitudinal direction of the vehicle.

The second subframe 20 may be disposed at an interval of greater than or equal to that of the battery region in a second direction, a width direction of the vehicle, from the first subframe 10.

The first subframe 10 and the second subframe 20 may be disposed in a first direction, and may be disposed symmetrically to each other. Alternatively, the first subframe 10 and the second subframe 20 may be disposed parallel to each other. The first subframe 10 and the second subframe 20 may serve to protect a battery or a battery pack from external impacts in a second direction.

The third subframe 30 may be connected to one end of the first subframe 10 and the second subframe 20, and may be disposed in the second direction.

A fourth subframe 40 may be connected to the other end of the first subframe 10 and the second subframe 20, and may be disposed symmetrically or to be parallel to the third subframe 30.

The third subframe 30 and the fourth subframe 40 may serve to protect a battery or battery pack from external impacts in a first direction.

The third subframe 30 or the fourth subframe 40 may include inner members 32 and 42 and outer members 31 and 41.

Hereinafter, the inner member 32 and the outer member 31 of the third sub frame 30 will be described. The description of the inner member 42 and the outer member 41 of the fourth subframe 40 is the same.

For example, the inner member 32 may be located close to a battery region in which a battery is located, and form an inner surface abutting the battery region.

For example, the inner member 32 may have a predetermined length in a third direction, be formed to extend in a second direction, and include a protrusion 32a protruding outwardly of the battery region.

In addition, an inner flange 32b of a flat surface bent outwardly from one end of the inner member 32, and may be coupled to the outer member 31 at the inner flange 32b.

The outer member 31 may be coupled to the inner member 32 at both ends in the third direction, and a cross-section parallel to the first direction may form a hollow portion S while being coupled to the inner member 32.

For example, the outer member 31 may have a predetermined length in the third direction and be formed to extend in the second direction, and the inner member 32 may be coupled to both ends of the outer member 31.

For example, the inner member 32 and the outer member 31 may be in surface contact at one end and, and may be in line contact at the other end.

Outer flanges 31a and 31b may be formed at an end of the outer member 31. When the outer flange 31a formed at one end thereof is coupled to the inner flange 32b, each flange may be fixed by overlapping each other and then coupling through mechanical coupling such as screws and bolts or coupling by welding.

The outer flange 31b formed at the other end may be coupled to the other end in which the inner flange 32b of the inner member 32 is not formed. In this case, one ends of the outer flange 31b and the inner member 32 may be in line contact.

For example, the outer flange 31b may be configured to have a step formed therein, and one end of the inner member 32 may be configured as a structure in which one end of the inner member 32 is hung on the step.

The outer member 31 may be coupled to both ends of the inner member 32, and a hollow portion S may be formed therein, so that a cross-section parallel to the first direction may be a closed cross-section in a state in which the inner member 32 and the outer member 31 are coupled.

The shape of the inner member 32 and the outer member 31 is not limited to the shape described above, and may include all configurations forming a hollow cross-section therein.

Since an impact in a first direction is transmitted to the battery region through a third subframe 30 and a fourth subframe 40, a reinforcing member 50 may be further included inside the third subframe 30 or the fourth subframe 40 to prevent battery impacts due to the impact.

A hollow portion S may be formed inside the third subframe 30 or the fourth subframe 10. Therefore, the cross-section cut in the first direction may have a cross-sectional shape with an empty interior. A reinforcing member 50 may be disposed in the hollow portion S.

The reinforcing member 50 may abut the third subframe 30 or the fourth subframe 40.

The reinforcing member 50 is located to abut the third subframe 30 or the fourth subframe 40 to prevent the battery from being deformed by external impacts in the first direction. The reinforcing member 50 may be located in the hollow portion S of the third subframe 30 or the fourth subframe 40 to prevent deformation due to impacts.

Since a reinforcing member 50 is provided in the hollow portion S, no special space is required for reinforcement, and an effect in which the battery region may be maintained as is, is provided.

For example, the reinforcing member 50 may be in contact with the outer members 31 and 41.

The external impacts in the first direction is first transmitted to the outer members 31 and 41 of the third subframe 30 or the fourth subframe 40, and thus the outer members 31 and 41 begin to be deformed under the influence of impacts. Therefore, it may be effective to support the impact transmitted to the outer members 31 and 41 to prevent deformation.

The reinforcing member 50 is a member for minimizing deformation by increasing deformation resistance due to external impacts, and should be formed in a manner that deformation itself is difficult.

For example, the reinforcing member 50 may have a hollow pipe shape.

When a collision in a first direction occurs, the third subframe 30 or the fourth subframe 40 receives a bending load. Since deformation resistance to the bending load is the highest for a circular cross-section, the reinforcing member 50 of the third subframe 30 or the fourth subframe 40 may be a hollow pipe shape with a circular cross-section therein.

In order to increase the deformation resistance to the bending load, the reinforcing member 50 may be provided with a plurality of pipes.

For example, a plurality of reinforcing members 50 may be provided in a third direction.

According to an embodiment of the present disclosure, a bracket 60 may be further included to couple the reinforcing member 50 to a third subframe 30 or a fourth subframe 40.

The bracket 60 may include a receiving groove 61a for receiving the reinforcing member 50 and a flat portion 61b coupled to the outer members 31 and 41.

The bracket 60 may be formed to have a receiving groove 61a curved in the first direction with a depth similar to a diameter of a cross-section of the reinforcing member 50 so that the bracket 60 may be coupled to the reinforcing member 50 from the outside. The bracket 60 may include a flat portion 61b at both ends thereof, as a surface which is in contact with the outer members 31 and 41 and coupled thereto.

The bracket 60 may be provided with various types of brackets 61 and 62 depending on the number of receiving grooves 61a for receiving the reinforcing member 50.

For example, a bracket 61 having a plurality of receiving grooves 61a may be formed.

The receiving groove 61a may be formed in plural according to the number of reinforcing members 50 disposed in a row in a third direction. Accordingly, the plurality of receiving grooves 61a may also be disposed in a row in the third direction.

In addition, when the plurality of receiving grooves 61a are provided, a central portion 61c, another flat section, may be formed between the receiving grooves 61a.

The central portion 61c may be formed between a position of the receiving portion 61a in a first direction and a position of the flat portion 61b in a first direction, or may be formed to be the same as the position of the flat portion 61b in the first direction. When the central portion 61c is the same as the position of the flat portion 61b in the first direction, the central portion 61c may also be coupled to the third subframe 30 or the fourth subframe 40.

As described above, when a plurality of receiving grooves 61a are formed, by including a plurality of reinforcing members 50 and preventing independent behavior of the reinforcing member 50, an effect of supporting deformation due to a collision load may be maximized.

In addition, the bracket 60 may extend in the third direction, and may be provided in plural in the second direction.

Since the reinforcing member 50 may extend in a second direction, fixing the reinforcing member 50 with a single bracket 60 may be inefficient. Therefore, the reinforcing member 50 may be fixed with a plurality of brackets 60. In this case, a bracket 62 having one receiving groove 61a and a bracket 61a having a plurality of receiving grooves 61a may be used together.

For example, when a reinforcing member 50 is coupled to outer members 31 and 41 by a bracket 60, the inner members 32 and 42 and the bracket 60 may be spaced apart from each other.

A reinforcing member 50 may be located on a closed cross-section in which outer members 31 and 41 and inner members 32 and 42 are formed, the reinforcing member 50 may be coupled to the outer members 31 and 41, and in a state in which the reinforcing member 50 is coupled to the outer members 31 and 41, the receiving groove 61a may form the closest straight-line distance to the inner members 32 and 42. Alternatively, the closest straight-line distance may be formed at any point at which the protrusion 32a of the inner members 32 and 42 and the receiving groove 61a are formed, and the bracket 60 and the inner member 32 may be configured not to abut with each other. Therefore, even if deformation occurs in the outer members 31 and 41 due to external impacts, the inner members 32 and 42 may be prevented from being immediately deformed.

The reinforcing member 50 may be formed to extend in a second direction. The reinforcing member 50 may have an end which is not located in a hollow portion S of the third subframe 30 or the fourth subframe 40 formed therein.

For example, a portion curved to fit the shape of the first subframe 10 or the second subframe 20 may be formed, at least a portion of the reinforcing member 50 may be in contact with the first subframe 10 or the second subframe 20, and the end of the reinforcing member 50, and the first subframe 10 or the second subframe 20, which are in contact with the first subframe 10 or the second subframe 20 may be coupled to the bracket 60.

For example, if an end of the reinforcing member 50 located in a hollow portion S of the fourth subframe 40 extends to the first subframe 10, the reinforcing member 50 may be coupled to an outer member 11 of the first subframe 10.

This is also the same as the case of the reinforcing member 50 located in the hollow portion S of the third subframe 30, and even when the end of the reinforcing member 50 extends the second subframe 20, the reinforcing member 50 may be coupled to the outer member of the second subframe 20.

Since the end of the reinforcing member 50 is connected to the first subframe 10 or the second subframe 20 disposed in the first direction, an impact applied to the third subframe 30 or the fourth subframe 40 may be transmitted to the first subframe 10 or the second subframe 20, thereby providing an effect of effectively transmitting the impact.

In addition, since the end of the reinforcing member 50 coupled thereto by the bracket 60, an effect that can not be easily separated by the impact in the first direction and can increase a supporting force, is provided.

The reinforcing member 50 may be comprised of a plurality of members having various lengths and thicknesses depending on the shape of the subframe coupled thereto.

For example, the reinforcing member 50 may include a first reinforcing member 51 and a second reinforcing member 52 having different lengths and shapes.

The first reinforcing member 51 may be formed so that both ends thereof are curved to be in contact with the first subframe 10 and the second subframe 20. An intermediate portion may be formed to extend in a second direction according to the shape of the third subframe 30 or the fourth subframe 40.

The second reinforcing member 52 may be shorter than the first reinforcing member 51, and one end of the second reinforcing member 52 may be in contact with the first subframe 10 or the second subframe 20, and the other end thereof may be in contact with the third subframe 30 or the fourth subframe 40. Therefore, the curved portion may be formed only once, and the other end thereof may be located at one point of the third subframe 30 or the fourth subframe 40.

As described above, the reinforcing member 50 may be formed to have different types, so that it may not overlap a structure of the subframe, and may be easily changed according to a design value. However, the reinforcing member 50 may be provided in plural with the same reinforcing member, and may be set differently according to the design.

However, without being limited to the above-described examples, the reinforcing member 50 may be coupled to inner members in addition to outer members of the first subframe 10 to the fourth subframe 40, and may be coupled to both the outer member and the inner member.

In addition, in addition to mechanical coupling by the bracket 60, the reinforcing member 50 may be coupled to the outer member by welding, and both coupling using the bracket 60 and coupling by welding may be used for the coupling, and both are not limited to the above-described coupling methods.

Hereinafter, a battery frame 100 included in an electric vehicle frame will be cited from the contents as described above.

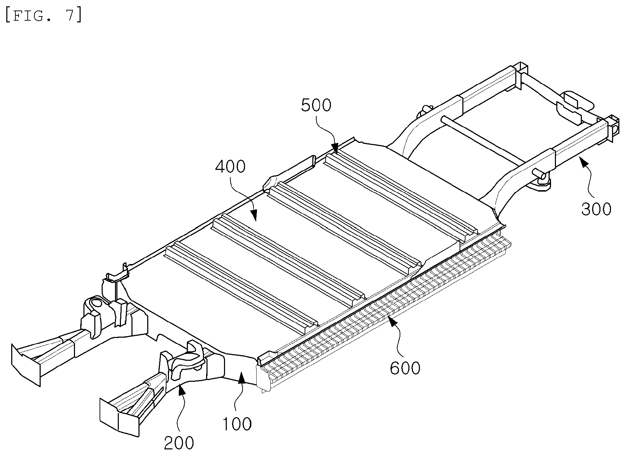

FIG. 7 is a drawing illustrating an electric vehicle frame according to an embodiment of the present disclosure.

The electric vehicle frame according to an embodiment of the present disclosure includes a battery frame 100, a front frame 200, a rear frame 300, a floor 400, and a cross member 500.

The battery frame 100 may include the first subframe 10 to the fourth subframe 40, and include a reinforcing member 50 in a hollow portion S formed inside the third subframe 30 or the fourth subframe 40. The battery frame 100 may be disposed along the periphery of the battery region. Other contents thereof may be cited from the contents described above.

A front frame and a rear frame may be coupled to the battery frame 100 in a first direction, a longitudinal direction of the vehicle.

The front frame 200 may be disposed in the first direction based on the battery frame 100. The front frame 200 may be a frame forming a front portion of the vehicle. The rear frame 300 may be disposed in the first direction based on the battery frame 100, and may be located in the opposite direction of the front frame 200. The rear frame 300 may be a frame forming a rear portion of the vehicle.

In a conventional vehicle frame 10 (see FIG. 1A), there was a longitudinal member 11 (see FIG. 1A) integrally or by connecting a plurality of members in a second direction, but in an electric vehicle, since there is a battery region, a battery frame 100 may be disposed to maximize the battery region. By coupling the front frame 200 and the rear frame 300 to the battery frame 100 with the same length as that in the second direction formed by the longitudinal member 1 (see FIG. 1), a frame F (see FIG. 1) formed to include a conventional longitudinal member 1 (see FIG. 1) and a transverse member 2 (see FIG. 1) may be replaced.

In this case, some structures including the battery frame 100 may be maintained as a single structure or a few structures, and a length of the vehicle may be formed differently by varying the front frame 200 and the rear frame 300 differently depending on the vehicle type.

The floor 400 covers at least one surface of the battery region, and is coupled to the battery frame 100. The floor 400 may serve as a floor of an interior space in the vehicle in the completed vehicle body structure.

The cross member 500 is fixed to the floor 400, is located outside of the battery region, and may be formed to extend in the second direction.

Since a battery pack should be located in the battery region, the cross member 500 may serve to reinforce the floor 400 in the second direction from the outside of the battery region.

In addition, the electric vehicle frame according to an embodiment of the present disclosure may further include a sill side 600, and the sill side 600 may be disposed to abut the battery frame 100 in a second direction, a width direction of the vehicle, and may be formed to extend in a first direction, a longitudinal direction of the vehicle. Since the sill side 600 is disposed to be in contact with a side surface of the battery frame 100 and fixed while abutting the battery frame 100, so an effect of increasing structural rigidity may be provided.

While example embodiments have been illustrated and described above, it will be apparent to those skilled in the art that modifications and variations could be made without departing from the scope of the present disclosure as defined by the appended claims.

### Description of Reference Numerals

| | | | |
|---|---|---|---|
| 1: | Transverse Member | 2: | Longitudinal Member |
| 10: | First Subframe | 20: | Second Subframe |
| 30: | Third Subframe | 40: | Fourth Subframe |
| 50: | Reinforcing Member | 60: | Bracket |
| 100: | Battery Frame | 200: | Front Frame |
| 300: | Rear Frame | 400: | Floor |
| 500: | Cross Member | 600: | Sill Side |
| F: | conventional Frame | | |

## Claims

1. A battery frame having a battery region in which a battery is located defined therein, the battery frame comprising:
a first subframe formed to surround at least a portion of the battery region, and disposed parallel to a first direction, a longitudinal direction of a vehicle;
a second subframe located at an interval, equal to or greater than the battery region, in a second direction, a width direction of the vehicle, from the first subframe;
a third subframe connected to one end of the first subframe and the second subframe, and disposed in the second direction; and
a fourth subframe connected to the other end of the first subframe and the second subframe,
wherein a hollow portion is formed inside the third subframe or the fourth subframe,
wherein the battery frame further includes a reinforcing member disposed in the hollow portion to abut the third subframe or the fourth subframe,
wherein, when viewed from a third direction, a height direction of the vehicle,
the first subframe to the fourth subframe are connected as a single frame to surround the battery region.

2. The battery frame of claim 1, wherein the third subframe or the fourth subframe includes an inner member forming an inner surface abutting the battery region, and
an outer member coupled to the inner member at both ends in the third direction, and having a cross-section parallel to the first direction forming the hollow portion while being coupled to the inner member,
wherein the reinforcing member is in contact with the outer member.

3. The battery frame of claim 2, wherein the reinforcing member is a hollow pipe.

4. The battery frame of claim 2, further comprising:
a bracket for fixing the reinforcing member,
wherein the bracket includes a receiving groove for receiving the reinforcing member, and a flat portion coupled to the outer member.

5. The battery frame of claim 4, wherein the bracket has a plurality of the receiving grooves,
wherein the bracket extends in the third direction, and is provided in plural in the second direction, and
the reinforcing member is provided in plural in the third direction.

6. The battery frame of claim 4, wherein at least a portion of the reinforcing member is in contact with the first subframe or the second subframe, and
an end of the reinforcing member and the first subframe or the second subframe, which are in contact, are coupled by the bracket.

7. The battery frame of claim 6, wherein the reinforcing member comprises
a first reinforcing member having both ends curved to be in contact with the first subframe and the second subframe, and
a second reinforcing member having a length shorter than the first reinforcing member, having one end in contact with the first subframe or the second subframe, and the other end coupled to the third subframe or the fourth subframe.

8. The battery frame of claim 4, wherein the inner member and the outer member are in surface contact at one end, and are in line contact at the other end, and
the inner member and the bracket are spaced apart from each other.

9. An electric vehicle frame, comprising:
a battery frame of one of claims 1 to 8 having a battery region in which a battery is located defined therein, and formed to surround the battery region;
a front frame and a rear frame coupled to the battery frame in a first direction, a longitudinal direction of a vehicle;
a floor covering at least one surface of the battery region, and coupled to the battery frame; and
a cross member coupled to the floor and located outside of the battery region.
